# EUROPÄISCHE PATENTSCHRIFT

(11) **EP 1 509 005 B1**
(45) Veröffentlichungstag und Bekanntmachung des Hinweises auf die Patenterteilung: **01.07.2015**
(21) Anmeldenummer: 04016902.1
(22) Anmeldetag: 17.07.2004
(51) Int. Cl.: H04L 12/403

(54) **Verfahren und Vorrichtung zur Übertragung von Daten über ein Busnetz mittels Broadcast**
Method and apparatus for transmitting data over a bus-network using broadcast
Méthode et appareil pour la transmission de données par diffusion dans un réseau bus

(30) Priorität: 16.08.2003 DE 10337699
(43) Veröffentlichungstag der Anmeldung: 23.02.2005
(73) Patentinhaber: PHOENIX CONTACT GmbH & Co. KG, 32825 Blomberg (DE)
(72) Erfinder: Meyer-Gräfe, Karsten, 33161 Hövelhof (DE)
(74) Vertreter: Kampfenkel, Klaus

(56) Entgegenhaltungen:
- EP-A- 1 050 826
- EP-A- 1 075 110
- DE-A- 4 213 792
- DE-A- 10 155 975
- JUNGER B: "PROFIBUS CONTRA INTERBUS-S. EIN AKTUELLER VERGLEICH" ELEKTRONIK, FRANZIS VERLAG GMBH. MUNCHEN, DE, Bd. 43, Nr. 21, 18. Oktober 1994 (1994-10-18), Seiten 68-69,74,76, XP000469303 ISSN: 0013-5658

## Beschreibung

Die Erfindung betrifft ein Verfahren zur Übertragung von Daten über ein Busnetz, an welches mehrere Teilnehmer angeschlossen sind sowie zur Durchführung des Verfahrens angepasste Vorrichtungen und Busnetze.

Insbesondere für Anwendungen aus dem Bereich der Sicherheitstechnik ist das Aufzeichnen des über ein Busnetz übertragenen Datenstroms eine zweckdienliche Eigenschaft beispielsweise, um auf einfache Weise Zugriff auf applikationsspezifische sicherheitsgerichtete Eingangs- und Ausgangsdaten zu haben und in Folge Fehler frühestmöglich zu erkennen und zulässige maximale Reaktionszeiten entsprechend zu minimieren.

Basierend auf dem Ringsystem eines Standard-Interbus nach DIN E 19258 bietet sich eine solche Aufzeichnung der Daten derzeit lediglich unmittelbar im oder nach dem Master an, da nur an dieser Stelle alle Eingangs- oder Ausgangsinformationen zur Auswertung vorliegen.

Ferner hat ein Punkt-zu-Punkt basiertes Übertragungsverfahren den Nachteil, dass viele, für die eigentliche Funktion nicht benötigte Daten, also insbesondere die sogenannten Overhead-Daten für jeden Teilnehmer einzeln zu übertragen sind, wodurch sich die Effektivität der Übertragung insgesamt verringert, welches sich negativ auf die Reaktionszeiten, also im Wesentlichen auf die Zeit zwischen dem Erhalt von Eingangsdaten, z.B. über Sensoren von Eingangskomponenten der angeschlossenen Teilnehmer, und korrespondierenden Ausgangsdaten, z.B. für Aktoren von Ausgangskomponenten der angeschlossenen Teilnehmer, im Sicherheitssystem auswirkt.

Beim Interbus erfolgt eine Übertragung von sicherheitsrelevanten Eingangsdaten z. B. dadurch, dass eine zentrale Einheit im Interbus, die im Master integriert ist oder auch von diesem abgesetzt sein kann, sicherheitsgerichtete Daten mitliest und auswertet.

Im Gegensatz zu dem dargestellten Übertragungsweg der Eingangsdaten in die zentrale Steuerung oder eine Überwachungseinrichtung stellt die Ausgabe von sicherheitsgerichteten Signalen jedoch besondere Anforderungen. Einerseits ist deren Anzahl im Vergleich zu den Eingangsdaten deutlich geringer, andererseits müssen die ausgegebenen sicherheitsgerichteten Daten aber in der Regel möglichst schnell übertragen werden können.

Bei bestehenden Sicherheitssystemen werden Daten daher herkömmlicherweise nach dem Aufruf/Antwort-Prinzip ausgetauscht, wobei in heute üblichen Lösungen eine zentrale Einheit oder eine Überwachungseinheit die Sicherheitsdaten im Aufruf/Antwort-Verfahren zu den angeschlossenen sicherheitsgerichteten Teilnehmern überträgt. Ein wesentlicher Nachteil hierbei liegt jedoch in der vorstehend aufgezeigten Notwenigkeit, dass für jeden Teilnehmer zahlreiche sogenannte Overhead-Daten übertragen werden müssen, die eigentlich redundant sind.

Teilweise sind ferner unter Umständen sogar Manipulationen, beispielsweise in dem Interbus-Datenrahmen notwendig, wobei für derartige Manipulationen die Daten zwischen gespeichert werden müssen und somit eine Verzögerung auftritt, die zu einer weiteren signifikanten Verlängerung der Reaktionszeit führt.

Andere Übertragungssysteme, insbesondere aus dem IT-Umfeld, weisen bereits Vorrichtungen auf, um Broadcast-Meldungen abzusetzen.

Beispielhaft sei hierzu auf Netzwerke und Kommunikationstechniken verwiesen, die ein gemeinsames Übertragungsmedium mit Mehrfachzugriff und dynamischer Zuordnung des Übertragungsmediums aufweisen. Mit Hilfe der jeweiligen Mehrfachzugriffsverfahren können neben einer reinen Punkt-zu-Punkt oder Unicast-Übertragung, bei welcher Daten an einen einzelnen Empfänger gesendet werden, auch mittels einer Multicast- und einer Broadcast-Übertragung Informationen gleichzeitig zu mehreren Teilnehmern übertragen werden, so dass in diesem Fall der Anteil von Overhead-Daten gegenüber einer Vielzahl von separaten Unicast-Übertragungen reduziert ist.

Die deutsche Offenlegungsschrift DE4213792 beschreibt die Datenübertragung auf einer Busleitung. Dabei wird von einem Master-Teilnehmer ein Summenrahmentelegramm an die anderen Teilnehmer gesendet. Diese senden, sofern sie dazu aufgefordert worden sind, jeweils Antwortelegramme an den Master.

Die deutsche Patentschrift 199 35 490 offenbart diesbezüglich ein Verfahren sowie eine Steuer- und Datenübertragungsanlage zur Bereitstellung einer entsprechenden Kommunikation zwischen mehreren Teilnehmern in einem Netzwerk, welches zumindest einen Mehrfachzugriffskanal, der dynamisch zugeordnet wird, aufweist. Hierbei ist einer der Teilnehmer als Master und die anderen Teilnehmer als Slaves projektiert, wobei jedem Teilnehmer ein Standard-Mehrfachzugriffsprotokoll mit der Fähigkeit einer Broadcast-Datenübertragung und eine dem Standard-Mehrfachzugriffsprotokoll überlagerte Master/Slave-Protokollinstanz zugeordnet wird, die das Abrufen entsprechender Dienste des Standard-Mehrfachzugriffsprotokolls zur Ausführung eines Master/Slave-Übertragungsverfahren steuert. Gemäß Offenbarung umfasst jeder Kommunikationszyklus die Schritte des Sendens eines Synchronisationstelegramms vom Master an die beteiligten Slaves, wobei in dem Synchronisationstelegramm zumindest eine den Kommunikationszyklus kennzeichnende Information übertragen wird, des Sendens eines Aufruftelegramms vom Master an einen beteiligten Slave über einen Unicast-Aufruf und des Sendens eines Antworttelegramms vom Slave an den Master und an die übrigen beteiligten Slaves im Broadcast-Modus.

Gemäß Offenbarung der vorstehenden Patentschrift wird somit das für Feldbusse übliche Master/Slave-Verbindungsverfahren auf die gerade in LAN-Netzwerken anzutreffenden Protokolle abgebildet.

Somit wird auch bei bestehenden Sicherheitssystemen, die an und für sich bereits Vorrichtungen aufweisen, um Broadcast-Meldungen abzusetzen, zumindest Ausgangsdaten herkömmlicherweise nach dem Aufruf/Antwort-Prinzip übertragen.

Eine Aufgabe der Erfindung ist es, für die Übertragung von Daten über ein Busnetz, an welches mehrere Teilnehmer angeschlossen sind, einen gegenüber dem Stand der Technik neuen Weg aufzuzeigen, mit welchem vorstehend aufgezeigten Problemen des Standes der Technik begegnet werden kann und insbesondere der Zugriff auf ausgewählte Daten im Wesentlichen an jeder gewünschten oder applikationsspezifisch benötigten Stelle des Busnetzes bei gleichzeitig hoher Übertragungseffizienz gewährleistbar ist.

Die erfindungsgemäße Lösung der Aufgabe ist auf höchst überraschende Weise bereits durch die Gegenstände mit den Merkmalen der anhängenden unabhängigen Patentansprüche gegeben.

Vorteilhafte und/oder bevorzugte Ausführungsformen bzw. Weiterbildungen sind Gegenstand der jeweiligen abhängigen Ansprüche.

Die Erfindung schlägt somit zur Übertragung von Daten über ein Busnetz, an welches mehrere Teilnehmer angeschlossen sind und bei welchem je Kommunikationszyklus Daten mittels eines zur Punkt-zu-Punkt-Übertragung ausgebildeten Datenübertragungsprotokoll von wenigstens einem Teilnehmer zu wenigstens einem weiteren Teilnehmer übertragen werden, vor, dass innerhalb des Punkt-zu-Punkt-Übertragungsprotokolls ein Broadcast-Telegramm definiert wird, innerhalb welchem ausgewählte Daten in einem Broadcast-Übertragungsmodus übertragen werden können.

Ein wesentlicher Vorteil besteht somit darin, dass unter erfindungsgemäßer Bereitstellung von zur Verwendung innerhalb eines Busnetzes ausgebildeten Vorrichtungen mit Mitteln zum Bearbeiten eines Punkt-zu-Punkt-Übertragungsprotokolls mit einem innerhalb des Protokolls definierten Broadcast-Telegramm ermöglicht wird, dass bereits Informationen, die bisher mittels Aufruf an einzelne Teilnehmer übertragen werden, nunmehr auch unter Verwendung eines für die Punkt-zu-Punkt-Übertragung ausgebildeten Busnetzes an einer Vielzahl von dezentralen Einheiten übertragbar sind. In Folge können ausgewählte Daten, insbesondere Ausgangsdaten, in äußerst flexibler Weise und im Wesentlichen ortsungebunden zur Verfügung gestellt und/oder ausgewertet werden. Darüber hinaus führt die Nutzung des Broadcast-Telegramms zu einer wesentlichen Einsparung von bisher notwendigen Steuerdaten, wodurch eine wesentliche Steigerung der Effektivität der Übertragung, insbesondere bei Sicherheitssystemen eine Verringerung maximal benötigter Reaktionszeiten, und also insgesamt eine wesentliche Steigerung der Übertragungsfunktionalität gewährleistet.

Somit ist gemäß einer erfindungsgemäßen Weiterbildung bevorzugt vorgesehen, dass, praktischer Weise in einem Sicherheitsfeld, innerhalb des Broadcast-Telegramms sicherheitsrelevante Daten, insbesondere sicherheitsrelevante Ausgangsdaten übertragen werden.

Insbesondere bei Anwendung eines Master/Slave-basierten Busnetzes, wie beispielsweise des als Ringbus ausgebildeten Interbus, ist darüber hinaus zweckmäßigerweise vorgesehen, dass eine zentrale Einheit, die vorzugsweise als Teil eines Master-Teilnehmers oder als separater Broadcast-Teilnehmer unmittelbar auf einen Master-Teilnehmer folgend ausgebildet ist, ein Protokoll erzeugt, welches mittels des Broadcast-Telegramms allen im System angeschlossenen Teilnehmers ein Sicherheitsprotokoll überträgt.

In ergänzender oder alternativer Anwendung schlägt die Erfindung ferner vor, ein Sicherheits-Broadcast-Telegramm zusätzlich zu einem Standard- oder allgemeinen Broadcast-Protokoll bei einem Übertragungsverfahren von Daten über ein Busnetz einzufügen, an welches mehrere Teilnehmer angeschlossen sind und bei welchem Daten mittels eines zur Broadcast-Übertragung ausgebildeten Datenübertragungsprotokoll von wenigstens einem Teilnehmer an eine Vielzahl von weiteren Teilnehmern übertragen werden. Folglich ist auch bei derartigen Bussystemen, wie beispielsweise einem CAN oder Profibus gewährleistbar, sicherheitsrelevante Daten, insbesondere Ausgangsdaten mit gegenüber den vorstehend erwähnten entsprechenden Vorteilen zu übertragen.
In äußerst zweckmäßiger Ausführungsform sind für beide erfindungsgemäßen Anwendungen ferner bevorzugt den zum Erzeugen derartiger sicherheitsrelevanter Daten innerhalb des Broadcast-Sicherheitsprotokolls entsprechend angepassten Mitteln Mittel zugeordnet, die das Broadcast-Telegramm als Ganzes absichern. Hierdurch wird der Anteil von Overhead-Daten, insbesondere gegenüber den bestehenden Sicherheitssystemen, welche Daten nach dem Aufruf/Antwort-Prinzip und somit unter zwingender Notwendigkeit von einer Vielzahl an für die eigentliche Funktion nicht benötigten Overhead-Daten übertragen, zusätzlich wesentlich reduziert.

In weiterer praktischer Ausführung ist ferner vorgesehen, dass innerhalb des Broadcast-Telegramms Broadcast-basierte Daten und/oder Punkt-zu-Punkt-basierte Daten übertragen werden. Folglich kann somit eine für alle Teilnehmer des Busnetzes gemeinsam bestimmte Information oder ein Befehl, wie beispielsweise ein universelles "Not-Aus" übertragen werden und/oder für ausgewählte Teilnehmer jeweils spezifisch zugewiesene Information, Befehle und/oder Adressen.

Insbesondere bei einer Punkt-zu-Punkt-basierten Datenübertragung innerhalb des Broadcast-Telegramms ist ferner vorgesehen, dass die Zuordnung zwischen einem bestimmten Teilnehmer und den diesem zugewiesenen Daten mittels einer Adressierung des Teilnehmers und/oder einer der physikalischen Anordnung der Teilnehmer am Bus entsprechenden Anordnung der Daten im Datenstrom erfolgt. Die Anordnung und Größe der in dem erfindungsgemäßen Sicherheitsfeld für ausgewählte Teilnehmer, in besonders bevorzugter Weise für alle Ausgangsteilnehmer bzw. Teilnehmer mit Ausgangsmodulen, übertragenen sicheren Daten ist folglich äußerst flexibel und applikationsspezifisch variierbar.

Um in weiterer zweckmäßiger Fortbildung für das applikationsspezifische Überwachen, Auswerten bzw. Monitoring ausgewählter Daten Daten einfach aus dem Broadcast-Telegramm von wenigstens einem der weiteren angeschlossenen Teilnehmer aus und/oder mit zu lesen, weisen diese folglich in praktischer Weiterbildung Busteilnehmer-basierte Mittel zum definierten Zuordnen von Daten zu einem jeweiligen Teilnehmer auf, insbesondere um Punkt-zu-Punkt-basierte Daten und somit spezifischen Teilnehmern zugewiesene Daten vorzugsweise selbständig zu extrahieren.

Von Vorteil ist ferner, dass der Zugriff von derartigen Teilnehmer auf Daten des Broadcast-Telegramms in der Praxis synchron oder nacheinander erfolgen kann, und folglich die Erfindung auf eine Vielzahl von Busnetztypen anwendbar ist.

Die aus- und/oder mitlesenden Teilnehmer weisen darüber hinaus bevorzugt Mittel auf, um eine Fehlerüberprüfung von aus- und/oder mitgelesenen Daten und/oder eines gesamten je Kommunikationszyklus erhaltenden Datenstroms durchzuführen. Innerhalb des Busnetzes kann somit von im Wesentlichen jeder Stelle aus eine Teilnehmer-basierte dezentrale sicherheitsgerichtete Überwachung des applikationsspezifisch verwendeten Busnetzes und/oder des übertragenen Datenstrom auf Fehler sichergestellt werden, welches folglich bei Erkennen eines Fehlers ferner die Reaktionszeiten zum Durchführen einer, insbesondere selbstständig vom mitlesenden Teilnehmer bewirkten, sicherheitsgerichteten Reaktion, beispielsweise das direkte Abschalten einer oder mehrerer Einheiten oder eines gesamten Segmentes minimiert.

Um festzustellen, wie alt jeweils neu erhaltene bzw. ausund/oder mitgelesene Daten sind, um beispielsweise nach Ablauf einer vorgegebenen, insbesondere Zyklus-basierten, Worst-Case-Zeit selbständig abzuschalten, umfassen derartige Teilnehmer in zweckmäßiger Ausführung einen Speicher, in welchem die jeweilige Zeit eines Erhaltes von Daten ablegbar ist sowie eine entsprechend ausgebildete Überwachungsund/oder Zähleinrichtung.

Um ferner zu gewährleisten, das erfindungsgemäße Broadcast-Telegramm bzw. darin eingebettete ausgewählte Daten im Wesentlichen ohne grundlegende Veränderung bestehender Protokolle bereits nutzen zu können, sieht die Erfindung in äußerst zweckmäßiger Weiterbildung vor, das Broadcast-Telegramm im verwendeten Übertragungsprotokoll derart anzuordnen, dass dieses während jedes Kommunikationszyklus eine genau definierte Stelle einnimmt, und folglich in einfacher Weise für die Teilnehmer auffindbar ist. Ansonsten wird die sichere Broadcast-Information hierbei zweckmäßig ferner während der Übertragung wie die eines Teilnehmer behandelt.

Beim Interbus eignet sich somit in bevorzugter Weise die Anordnung des Broadcast-Telegramms unmittelbar zwischen dem Loopback-Wort und den Eingangsdaten, so dass basierend auf der entsprechenden Verlängerung des Summenrahmens folglich durch Anschluss eines Standard-Protokollbausteins und eventuell ergänzt um ein Schieberegister mit offenem Ausgang das Auffinden des Broadcast-Telegramms auf einfachste Weise sichergestellt wird.

Insbesondere unter Verwendung des Interbus ist hierbei für eine besonders einfache Umsetzung ferner vorgesehen, dass sichere Broadcast-Information über den Rückleitungsweg ausund/oder mitgelesen werden.

Die Anordnung eines sicheren Broadcast-Telegramms zusätzlich zu einer bereits vorhandenen Standard-Broadcast-Information, erfolgt insbesondere im unmittelbaren Anschluss an diese. Eine Auswertung und/oder Umsetzung der sicheren Information in sicherheitsgerichteten (Ausgangs-)Teilnehmern ist somit im Wesentlichen ohne jegliche Veränderung der Protokollstruktur gewährleistbar.

Aufgrund der bevorzugten vorstehend beschriebenen definierten Anordnung und Behandlung des Broadcast-Telegramms ist ferner eine zusätzliche Übertragung von auszulesenden Standarddaten, also insbesondere von Standard-Ausgangsdaten für angeschlossene Ausgangsteilnehmer weiterhin möglich.

Bevorzugt schlägt die Erfindung hierzu ferner vor, sicherheitsgerichtete Teilnehmervorrichtungen mehrkanalig auszubilden insbesondere, um auch die Übertragung zusätzlicher, speziell abgesicherter Parameterdaten zu jeder Zeit sicherstellen zu können.

In weiterer Ausgestaltung ist die Erfindung ferner insbesondere auch in nachrichtenorientierten Bussystemen derart einsetzbar, dass jeder angeschlossene Teilnehmer eine sichere Broadcast-Telegrammnachricht absetzen kann, die von dezentralen Teilnehmern jeweils unabhängig ausgewertet werden können. Dies ist in praktischer Umsetzung bevorzugt bei der Realisierung eines sicheren Querverkehrs zum Beispiel zwischen Eingängen und Ausgängen ohne beteiligten zentralen Teilnehmer einsetzbar.

Weitere Vorteile der Erfindung ergeben sich aus der nachfolgenden beispielhaften Beschreibung bevorzugter Ausführungsformen und unter Bezugnahme auf die beigefügten Zeichnungen.

In den Zeichnungen zeigen:
- Fig. 1: eine schematische Darstellung eines Ringnetzes mit einem Broadcaster zur erfindungsgemäßen Bereitstellung und Zusammenstellung eines ein Sicherheitsfeld umfassenden Broadcast-Telegramms,
- Fig. 2: eine beispielhafte vereinfachte Blockansicht eines an einen Interbus angeschlossenen, zur Auswertung eines Broadcast-Sicherheitsfeldes gemäß Fig. 1 ausgebildeten sicheren Teilnehmers,
- Fig. 3a-3c: eine verallgemeinerte schematische Darstellung eines Interbus-Ringnetzes zur Veranschaulichung von an Schnittstellen einzelner Teilnehmer anstehenden Daten während der Datenübertragung eines Kommunikationszyklusses, und
- Fig. 4a: schematisch den Anteil von Overhead-Daten bei einer nachrichtenorientierten Datenübertragung gegenüber
- Fig. 4b: einer Broadcast-Übertragung.

Die nachfolgende beispielhafte Beschreibung einer bevorzugten Ausführungsform der Broadcast-Übertragung gemäß der Erfindung basiert im Wesentlichen auf einer sicherheitsgerichteten Anwendung des Interbus.

Grundsätzlich werden bei der Eingangs-/Ausgangs-orientierten Übertragung durch den Interbus alle Sensoren und Aktoren in einem Summenrahmen angesprochen.

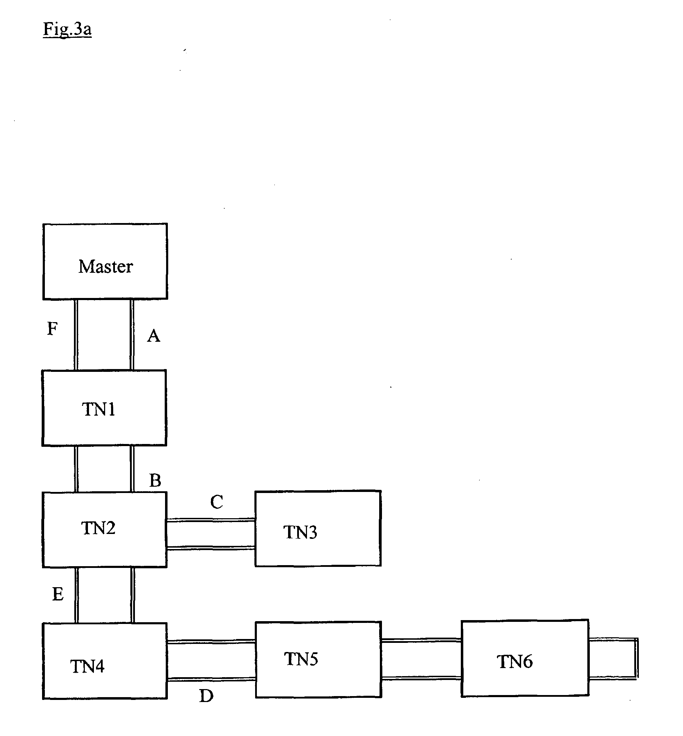

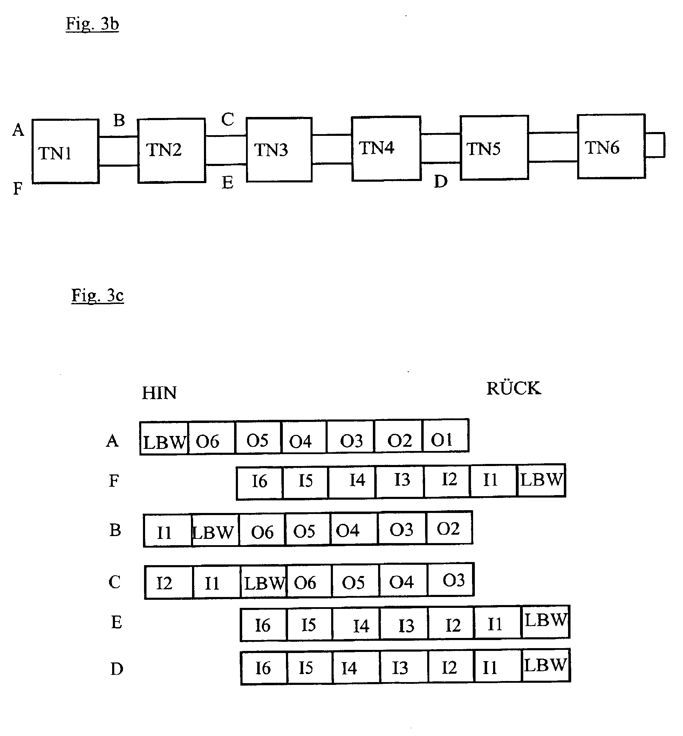

Die anhängenden Figuren 3a - 3b zeigen hierzu in einer schematischen Darstellung beispielhaft jeweils an Schnittstellen des Hin- und Rückleitungsweges einzelner Teilnehmer eines solchen Ringsystems anstehende Daten während eines vollständigen Interbus-Kommunikationszyklus. Aus den Figuren ist ersichtlich, dass an den mit den Buchstaben A, B und C gekennzeichneten ankommenden Schnittstellen (Fig. 3a) auf dem Hinleitungsweg der Slave-Teilnehmer TN1, TN2 bzw. TN3 immer unterschiedliche Summenrahmen (Fig. 3c) übertragen werden.

Ein Zyklus zur Übertragung eines Datenstroms beginnt durch den Master-Teilnehmer mit der Übertragung des Loopback-Wort LBW, welchem anschließend die aktuellen Ausgangsdaten 06, 05, O4, O3, O2 und O1 für die einzelnen Slave-Teilnehmer TN6, TN5, TN4, TN3, TN2 und TN1, beginnend mit dem letzten Teilnehmer folgen, also gemäß Fig. 3b, welche die Reihenfolge der Speicher der einzelnen Teilnehmer dargestellt, beginnend mit dem Teilnehmer TN6. An der Schnittstelle A liegen somit alle aktuellen Ausgangsdaten eines Kommunikationszyklus an und können dort folglich zur Auswertung durch eine, beispielsweise sichere Monitoreinheit abgegriffen werden.

Die Daten an der Schnittstelle B beginnen jedoch mit den Eingangsdaten I1 (Fig. 3c) des mit TN1 gekennzeichneten Teilnehmers, da das Loopback-Wort LBW noch am Teilnehmer TN1 anliegt, wenn dieser seine Eingangsdaten an Teilnehmer TN2 weiterreicht. Nach dem Loopback-Wort LBW folgen somit lediglich die Ausgangsdaten 06, 05, 04, 03 und 02 der restlichen Teilnehmer TN6, TN5, TN4, TN3 und TN2, beginnend mit dem Datenpaket des letzten Teilnehmers TN6 im Ring. Ähnliches lässt sich auch an der Schnittstelle C beobachten, mit dem Unterschied, dass sich nach dem Loopback-Wort LBW nur noch die Ausgangsdaten 06, 05, 04 und 03 der verbleibenden Teilnehmer TN6, TN5, TN4 und TN3 und vor dem Loopback-Wort noch zusätzlich die Eingangsinformation 12 des vorgelagerten Teilnehmers TN2 befinden.

Eine ganz andere Situation liegt z.B. an den Schnittstellen D und E auf der Rückleitung des Ringsystems vor. Die hier übertragenen Informationen sind für alle Teilnehmer im Top-Level-Fernbus eines Interbussystems, deren Eingangsdaten auf der rückführenden Übertragungsleitung direkt dem Master zugeführt werden, gleich. Die Teilnehmer TN2, TN4 und TN5 sind somit zwar über den gesamten rückführenden Datenstrom informiert, der auf der Rückleitung die Eingangsdaten I1, I2, I3, I4, I5 und I6 aller angeschlossenen Teilnehmer TN1, TN2, TN3, TN4, TN5 und TN6 vor dem Loopback-Wort LBW enthält (Fig. 3c). Von den OUT-Daten bzw. Ausgangsdaten des Masters bekommen jedoch auch die Teilnehmer TN2, TN4 und TN5 in diesem Fall nur einen Teil mit.

Der Teilnehmer TN2 beispielsweise kennt niemals die OUT-Daten für den Teilnehmer TN1, weil sie gar nicht durch ihn hindurch geleitet werden. Seine Eingangsdaten I1 hingegen bekommt er sofort nach Beginn eines neuen Interbus-Zyklus. Lediglich der erste Teilnehmer TN1 und der Master sind grundsätzlich in der Lage über die Hinleitung (Schnittstelle A) sowohl alle Ausgangsdaten 06, 05, 04, 03, 02 und 01 und über die Rückleitung (Schnittstelle F) alle Eingangsdaten I1, I2, I3, I4, I5 und I6 der angeschlossenen Teilnehmer TN1, TN2, TN3, TN4, TN5 und TN6 zu erhalten.

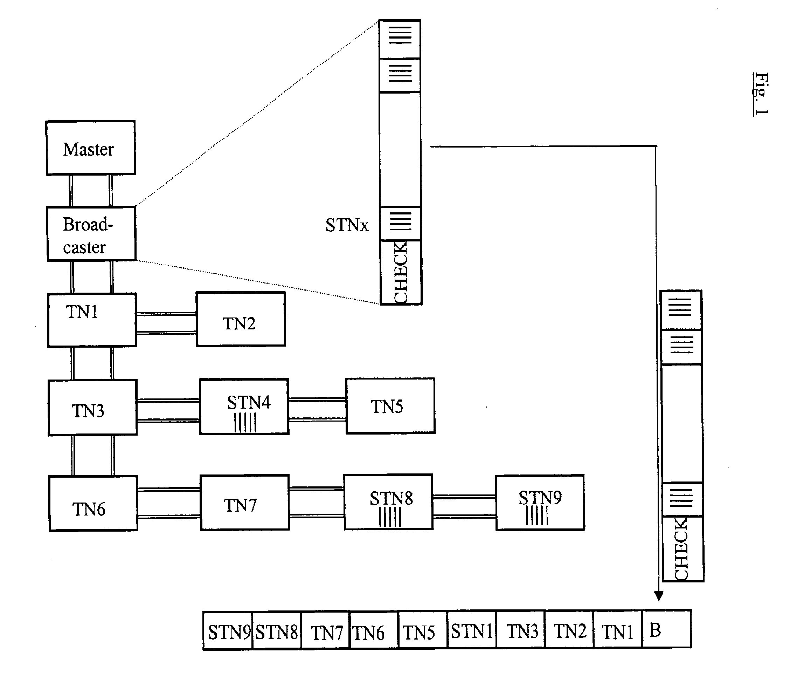

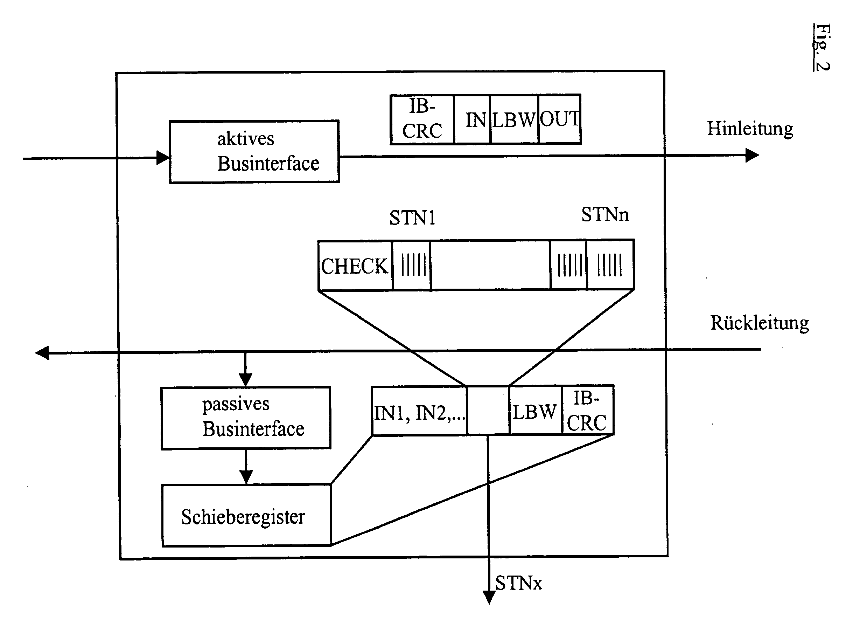

Unter Anwendung der Erfindung, insbesondere unter Bezugnahme auf die Fig. 1 und 2, wird nunmehr bei der Übertragung von Ausgangsdaten je Kommunikationszyklus ein Broadcast-Telegramm mit übertragen, das für darin eingebettete ausgewählte Daten einen flexiblen Zugriff ermöglicht. Basierend auf dem Interbus verlängert sich der Interbus-Summenrahmen um ein Broadcast-Telegramm.

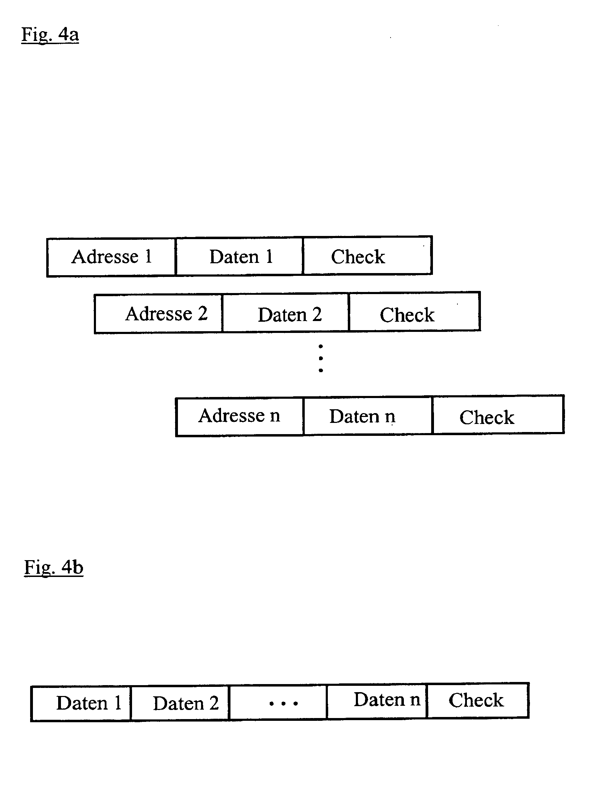

Insbesondere bei einer sicherheitsgerichteten Applikation umfasst das Broadcast-Telegramm folglich bevorzugt ein Sicherheitsfeld in dem sich alle Sicherheitsdaten befinden. Die Daten einer Broadcast-Übertragung, wie aus Fig. 4b zu sehen, müssen ferner nur einmal für das gesamte System abgesichert werden, so dass sich der Anteil von benötigten Overhead-Daten wesentlich reduzieren lässt. Zur Veranschaulichung einer mittels eines Broadcast-Telegramm möglichen Reduzierung von Overhead-Daten zeigt Fig. 4a beispielhaft benötigte Overhead-Daten für eine Punkt-zu-Punkt Übertragung, bei welcher Teilnehmer-bezogene Nutzdaten zusammen mit jeweils zugeordneten Sicherungsdaten Check und im Fall einer nachrichtenorientierten Übertragung zusätzlich mit jeweils zugeordneten Adressdaten für jeden Teilnehmer einzeln übertragen werden.

Unter Zugrundelegen eines Interbus-Systems können ferner erfindungsgemäß übertragende Ausgangsdaten für alle Ausgangsteilnehmer zu einem systemweit gleichen Zeitpunkt ausgegeben werden, wobei für sicherheitsgerichtete Teilnehmer zusätzliche Daten nicht mehr vorgesehen werden müssen. Darüber hinaus können weiterhin nicht sichere Daten, einschließlich nicht sichere Prozessdaten und/oder Parameterdaten z.B. per PCP (Peripherals Communication Protokoll) wie bei Standard-Interbus-Geräten weiterhin in der bekannten Art und Weise aufgebaut werden.

Auf die Anordnung und die flexible Auswertung eines erfindungsgemäßen Broadcast-Telegramms, ohne dass eine Veränderung der Daten erforderlich ist oder zwingend neue Technologien mit damit verbundenen technologischen Risiken zum Einsatz kommen müssen, wird nachfolgend basierend auf der bei Fig. 1 und Fig. 2 skizzierten Sicherheitsfeldern näher eingegangen.

Fig. 1 zeigt einen Ringbus mit einem Master-Teilnehmer, einem unmittelbar auf den Master folgenden Broadcast-Teilnehmer sowie weiteren angeschlossenen nicht sicheren Teilnehmern TN1, TN2, Tn3, TN5, TN6, TN7 und sicheren Teilnehmern STN4, STN8 und STN9. Unter Anwendung der Erfindung erzeugt im betrachteten Beispiel der nach der Steuerung bzw. dem Master angeordnete Broadcast-Teilnehmer bzw. Broadcaster ein Protokoll, das durch ein Broadcast-Telegramm allen weiteren angeschlossenen Teilnehmern TN1, TN2, TN3, STN4, TN5, TN6, TN7, STN8 und STN9 ein Sicherheitsprotokoll überträgt. Die zentrale, das Protokoll erzeugende Einheit Teilnehmereinheit kann jedoch in alternativer bevorzugter Ausführung beispielsweise auch im Master integriert sein.

In das Sicherheitsprotokoll werden vorzugsweise zumindest alle sicherheitsgerichteten Nutzdaten für die sicheren Teilnehmer STNx eingebettet, z.B. basierend auf Nibble oder Dienstdatenobjekten (SDO - Service data object), und erhält eine spezielle Absicherung CHECK, beispielsweise in Form eines sogenannten Cyclic Redundancy Checks (CRC).

Das Broadcast-Telegram wird je nach verwendetem Busnetz innerhalb des Basis Punkt-zu-Punkt-Protokolls derart eingebunden, dass es sich zu vorgebbaren Zeitpunkten bzw. Zyklusabschnitten an eindeutig definierten Stellen befindet und ein Zugriff von ausgewählten Teilnehmern entsprechend gewährleistet ist. Ferner benötigen die ausgewählten Teilnehmern die exakte Zuordnung der Nutzdaten zu den korrespondierenden Einheiten bzw. Teilnehmern, was beim Interbus durch eine spezielle Adressliste oder physikalische Anordnung und in anderen Bussen z.B. über enthaltene bzw. zugeordnete Adressen geschehen kann.

Bei einer Interbus-Applikation wird das Broadcast-Telegram somit zweckmäßiger Weise zwischen das Loopback-Wort LBW und den Eingangsdaten angeordnet und die (sicherheitsrelevanten) Nutzdaten als Informationsbits in Form von Eingangsbits im Datenstrom beginnend mit den Informationen für den ersten Teilnehmer eingefügt. Die Informationen für die folgenden Teilnehmer schließen sich unmittelbar an. Das Sicherheitsfeld gemäß Fig. 1 umfasst folglich zunächst die dem Broadcast-Teilnehmer zugeordnete Information B gefolgt von den Informationen für die übrigen Teilnehmer, also gefolgt von den Informationen für TN1, TN2, TN3, STN4, TN5, TN6, TN7, STN8 und STN9.

Die Gesamtheit der sicherheitsrelevanten Informationen wird einmal abgesichert, wozu z. B. der vorstehend erwähnte CRC, oder auch eine laufende Nummer oder eine Kombination mehrerer und gegebenenfalls auch anderer geeignete Maßnahmen herangezogen werden können.

Die angeschlossen, zum Zugreifen auf das Sicherheitsfeld ausgewählten sicherheitsgerichteten Teilnehmer STNx (Fig. 2) sind ausgebildet, aus dem erhaltenen bzw. mitgelesenen Datenstrom die für sie zutreffende Bitfolge extrahieren zu können, welches beim Interbus durch die vorgegebene Adressliste erfolgten kann. In praktischer Fortbildung überprüft jedoch gleichzeitig jeder Teilnehmer für sich alle von der zentralen Einheit empfangenen Bits mit denselben Maßnahmen wie die zentrale Einheit und vergleicht ihr Ergebnis mit dem Ergebnis des Broadcast-Telegramms. Beim Interbus kann dieses Überprüfen, wie bei Fig. 2 zu sehen, auch auf dem Hinleitungsweg mittels des aktiven Businterface durch Ermittlung eines Standard-Interbus-CRC IB-CRC erfolgen.

Das o.g. Mitlesen kann beim Interbus auf einfache Weise bevorzugt durch das Mithören auf der Rückleitung erfolgen, während in anderen Bussystemen die Information von allen Teilnehmern zum gleichen Zeitpunkt gelesen werden kann.

Zum Einen stehen im Interbus auf dem Rückleitungsweg am Ende eines gültigen Daten-Zyklus alle Informationen zur Verfügung und zum Anderen kann das jeweilige Sicherheitsfeld incl. der von der zentralen Einheit durchgeführten Sicherheitsinformationen (Nr., CRC, ...) mittels einer einfachen Schieberegister-Funktion im Bussystem bzw. im Summenrahmen an wohldefinierter Stelle aufgefunden werden.

Fig. 2 zeigt hierzu, in welcher Weise die Daten bei einem Interbus-System-Teilnehmer vorliegen und das Sicherheitsfeld z.B. an einem, im Wesentlichen beliebigen sicherheitsgerichteten Top-Level-Ausgangsteilnehmer STNx zur Auswertung mit folgendem Prinzip mitlesbar ist.

Grundsätzlich werden die Daten auf der Rückleitung eines Interbussystems vom letzten Teilnehmer zum Master ohne Änderungen direkt durch alle Teilnehmer geführt. Durch Anschluss eines Standard-Protokollbausteins und evtl. ergänzt um ein Schieberegister mit offenen Ausgang liest der Teilnehmer STNx alle Daten mit. Da in der Regel mehr Bits übertragen werden als der Protokollbaustein und das oder die Schieberegister zusammen erfassen können, fallen die Bits solange ungenutzt aus dem Teilnehmer heraus, bis der Interbus-Zyklus als gültig erkannt wurde. Zu diesem Zeitpunkt befinden sich folglich nur die letzten Bits in beiden Einheiten. Je nach Größe des Registers sind dies zunächst der Standard-Interbus-CRC und das Loopback-Wort. Direkt daran anschließend befinden sich im Schieberegister die Eingangsdaten des ersten Teilnehmers, also gemäß Fig. 1 des Broadcast-Teilnehmers, oder die Daten, die eine zentrale, das Broadcast-Telegramm erzeugende Einheit direkt dem Loopback-Wort LBW folgen lässt.

Die sichere Broadcast-Information ist somit bevorzugt im Übertragungsprotokoll so eingebunden, wie ansonsten die Information eines ersten Slave-Teilnehmers. Die für den oder die ausgewählten Teilnehmer bestimmte, insbesondere sichere Information wird hierbei an einer der Teilnehmer-Reihenfolge exakt angepassten Broadcast-Folge orientiert, so dass es genügt, für den jeweiligen Teilnehmer die Stelle innerhalb des Broadcast-Bereichs zu definieren, an welcher sich eine für sie bestimmte relevante Information befinden kann.

Um festzustellen, wie alt die neuen erhaltenen Daten sind, legt jeder angeschlossene Teilnehmer die Zeit der letzten eingegangen Information in zweckmäßiger Weise in einer Speichereinheit ab. Hierauf basierend können die Teilnehmer mit entsprechend ausgebildeten Mittel nach Ablauf einer vorgegebenen Worst-Case-Zeit selbständig eine definierte sicherheitsgerichtete Reaktion auslösen und insbesondere abschalten.

Da die im Broadcast-Feld übertragenen Informationen im Wesentlichen jede Art von Information beinhalten können, also beispielsweise einzelne Informationsbits, Befehle, Adressen usw., können mit den empfangenen Informationen folglich individuell und/oder applikationsspezifisch sicherheitsgerichtete Funktionen einzelner oder einer Gruppe von Teilnehmern, insbesondere von Ausgangsteilnehmern ausgelöst werden.

So kann insbesondere gezielt ein direktes Abschalten einer angeschlossenen Teilnehmer-Einheit, ein Abschalten einer Standard-E/A-Gruppe auf der sicherheitsgerichteten Teilnehmer-Einheit und/oder das Abschalten eines ganzen Segmentes, welches mehrere Teilnehmer beinhalten kann, bewirkt werden.

Da ferner die Ausgangsdaten den Standard-Datenstrom nur an der zentralen Stelle und dort auch nur einmal belasten, ist es grundsätzlich weiterhin möglich, die Ausgangsteilnehmer gleichzeitig noch mit Standard-Ausgangsdaten zu versorgen. Die jeweiligen sicherheitsgerichteten Einheiten sind hierzu in praktischer Weiterbildung der Erfindung mehrkanalig aufgebaut, so dass über eine Standard-PCP-Schnittstelle speziell abgesicherte Parameter-, Programmier- oder Konfigurationsdaten übertragbar sind, wenn die Daten auf der zentralen Einheit bzw. einer abgesetzten Broadcast-Einheit sicher erzeugt und auf den Teilnehmern sicherheitsgerichtet ausgewertet werden.

Für die Realisierung einer im Wesentlichen beliebigen zentralen Broadcast-Einheit ist es beim Interbus für eine einfache Umsetzung ohne grundlegende Veränderungen erforderlich, dass sich die sicherheitsgerichteten dezentralen Einheiten Top-Level des Interbus-Systems befinden. Da darüber hinaus die weiterführende Schnittstelle von z. B. Slaveteilnehmer TN3 gemäß Fig. 3b die ankommende Schnittstelle auf Slaveteilnehmer TN4 darstellt, ist auch eine Positionierung im Stich nur mit entsprechenden Anpassungen erlaubt, da an dieser Stelle noch nicht alle Eingangsdaten vorhanden sind. Erst die Leitung die im Beispiel gemäß Fig. 3 nach dem Teilnehmer TN6 über TN5, TN4, TN2, TN1 zurück zum Master führt, enthält alle Eingangs- bzw. In-Daten der angeschlossenen Teilnehmer. Ähnliches gilt bei den im Interbus möglichen, unterschiedlichen Systemebenen.

Derartige, notwendige Anpassungen hervorrufende Probleme treten hingegen nicht auf, wenn die Sicherheitsdaten von einer zentralen Einheit auf dem Interbus-Master etc. erzeugt werden.

Auch wenn die vorstehende Beschreibung im Wesentlichen auf einer sicherheitsgerichteten Anwendung des Interbus basiert, umfasst die Erfindung ferner Ausführungsformen, bei denen das "sichere" Broadcast-Feld zusätzlich zu einem Standard- oder allgemeinen Broadcast-Protokoll eingefügt wird. Beispielsweise kann bei Bussystem, wie ein CAN-Bus, ein Profibus oder ein Ethernet, ein Broadcast-Sicherheitsfeld in die Standard-Broadcast-Information eingefügt werden. Die Auswertung erfolgt auch bei diesen Bussystemen analog zum Interbus in den Ausgangsmodulen bzw. den Ausgangsteilnehmern mit entsprechenden Modulen, wobei der Broadcaster dabei einer sicheren Steuerung entspricht, die die sicherheitsrelevante Information zu den Sicherheits-Ein-/Ausgangsmodulen sendet.

Die genaue Position des "sicheren" Broadcast-Telegramms kann hierbei in zweckmäßiger Weise durch Einfügen unmittelbar nach dem allgemeinen Broadcast erfolgen, wobei die Reihenfolge nicht zwingend ist und durch eine jeweilige Adresse ersetzt werden kann.

Auch in derartigen Bussen kann das sichere Broadcast-Telegramm wiederum im Wesentlichen beliebige sichere Information umfassen, also insbesondere fest vorgegebene Informationsbits oder Befehle. Wie beschrieben, kann die Reihenfolge grundsätzlich applikationsspezifisch unterschiedlich sein oder gar beliebig, sofern durch entsprechende Maßnahmen, wie z.B. eine entsprechende Adressierung sichergestellt ist, dass die ausgewählten Teilnehmer, d.h. vorzugsweise die ausgewählten Ausgangsteilnehmer oder -gruppen, die für sie jeweils relevante Information auffinden können.

Folglich ist es in einer weiteren Ausprägung möglich, dass insbesondere in nachrichtenorientierten Bussystemen jeder angeschlossene sicherheitsrelevante Teilnehmer eine sichere Broadcast-Nachricht absetzen kann, die ausgewählte dezentrale (Ausgangs-)Teilnehmer jede für sich auswerten können. Nutzbar ist diese Eigenschaft insbesondere bei der Realisierung eines sicheren Informations-Querverkehrs z. B. zwischen Eingängen und Ausgängen ohne beteiligte zentrale Einheit.

Die Zuordnung der Eingangsdaten und die Programmierung der Bedingungen, die zum Abschalten der Ausgänge des sicherheitsrelevanten Ausgangsteilnehmers führen, ist vom Anwender in praktischer Weise auf der zentralen Einheit oder dem Broadcaster durchführen, wobei diese vom StandardProgramm der SPS nicht beeinflusst werden.

## Patentansprüche

1. Verfahren zur Übertragung von Daten über ein Busnetz, an welches mehrere Teilnehmer angeschlossen sind, wobei als Busnetz ein Master/Slave basierter Ringbus verwendet wird, ueber den je Kommunikationszyklus Daten mittels eines zur Punkt-zu-Punkt-Datenübertragung ausgebildeten Datenübertragungsprotokolls von einem als Master ausgebildeten Teilnehmer (Master) zu den weiteren Teilnehmern (TNx, STNx) jeweils einzeln übertragen werden,
**dadurch gekennzeichnet, dass**
innerhalb der Punkt-zu-Punkt-Datenübertragung von einem mit geeigneten Mitteln ausgebildeten Teilnehmer (Broadcaster) ein Broadcast-Telegramm, innerhalb welchem ausgewählte Daten in einem Broadcast-Übertragungsmodus übertragen werden koennen, derart eingebunden wird, dass es sich zu vorgebbaren Zeitpunkten bzw. Zyklusabschnitten an eindeutig definierten Stellen befindet und ein Zugriff von ausgewaehlten Teilnehmern entsprechend gewaehrleistet ist, und es je Kommunikationszyklus mit uebertragen wird.

2. Verfahren nach vorstehendem Anspruch, ferner **dadurch gekennzeichnet, dass** innerhalb des Broadcast-Telegramms sicherheitsrelevante Daten, insbesondere sicherheitsrelevante Ausgangsdaten übertragen werden.

3. Verfahren nach einem der vorstehenden Ansprüche,
**dadurch gekennzeichnet, dass**
zusätzlich zu einem Standard- oder allgemeinen Broadcast-Protokoll ein Sicherheits-Broadcast-Telegramm eingefügt wird, innerhalb welchem ausgewählte sicherheitsrelevante Daten übertragen werden können.

4. Verfahren nach einem der vorstehenden Ansprüche, ferner **dadurch gekennzeichnet, dass** eine zentrale Einheit (Master, Broadcaster) ein Sicherheitsprotokoll erzeugt, welches mittels des Broadcast-Telegramms an alle im System angeschlossenen Teilnehmern (TNx, STNx) übertragen wird.

5. Verfahren nach vorstehendem Anspruch, ferner **dadurch gekennzeichnet, dass** die zentrale Einheit als Teil eines Master-Teilnehmers oder als Broadcast-Teilnehmer unmittelbar auf einen Master-Teilnehmer folgend ausgebildet wird.

6. Verfahren nach einem der vorstehenden Ansprüche 3 bis 5, ferner **dadurch gekennzeichnet, dass** das Sicherheitsprotokoll zur Übertragung sicherheitsrelevanter Daten als Ganzes mittels einer Sicherheitsinformationen, insbesondere unter Verwendung einer CRC-Checksumme, abgesichert wird.

7. Verfahren nach einem der vorstehenden Ansprüche 3 bis 6, ferner **dadurch gekennzeichnet, dass** innerhalb des Sicherheitsprotokolls Broadcast-basierte und/oder Punkt-zu-Punkt-basierte Daten übertragen werden.

8. Verfahren nach einem der vorstehenden Ansprüche, ferner **dadurch gekennzeichnet, dass** eine Zuordnung zwischen einem Teilnehmer, insbesondere Ausgangsteilnehmer, und diesem innerhalb des Broadcast-Telegramms zugewiesenen Daten mittels einer Adressierung des Teilnehmers und/oder einer der Anordnung der Teilnehmer entsprechenden Anordnung der Daten im Datenstrom erfolgt.

9. Verfahren nach einem der vorstehenden Ansprüche, ferner **dadurch gekennzeichnet; dass** Daten aus dem Broadcast-Telegramm von wenigstens einem Teilnehmer, insbesondere Ausgangsteilnehmer, ausgelesen werden.

10. Verfahren nach einem der vorstehenden Ansprüche, ferner **dadurch gekennzeichnet, dass** Daten aus dem Broadcast-Telegramm von wenigstens einem Teilnehmer, insbesondere Ausgangsteilnehmer, auf der Rückleitung mit- und/oder ausgelesen werden.

11. Verfahren nach einem der vorstehenden Ansprüche, ferner **dadurch gekennzeichnet, dass** von Teilnehmern, insbesondere Ausgangsteilnehmern, auf Daten des Broadcast-Telegramms synchron zugegriffen wird.

12. Verfahren nach einem der vorstehenden Ansprüche, ferner **dadurch gekennzeichnet, dass** Teilnehmer, insbesondere Ausgangsteilnehmer, aus dem Broadcast-Telegramm die ihnen zugewiesenen Daten durch den Teilnehmer, insbesondere den Ausgangsteilnehmer extrahieren.

13. Verfahren nach einem der vorstehenden Ansprüche, ferner **dadurch gekennzeichnet, dass** Teilnehmer, insbesondere Ausgangsteilnehmer, eine Überprüfung des Datenstroms durch den Teilnehmer, insbesondere den Ausgangsteilnehmer durchführen.

14. Verfahren nach einem der vorstehenden Ansprüche, ferner **dadurch gekennzeichnet, dass** wenigstens ein Teilnehmer, insbesondere Ausgangsteilnehmer, die Zeit des Erhaltes von Daten ablegt.

15. Verfahren nach einem der vorstehenden Ansprüche, ferner **dadurch gekennzeichnet, dass** Teilnehmer, insbesondere Ausgangsteilnehmer, durch den Teilnehmer, insbesondere den Ausgangsteilnehmer eine sicherheitsgerichtete Reaktion unter Ansprechen auf im Broadcast-Telegramm übertragene Daten durchführen.

16. Verfahren nach einem der vorstehenden Ansprüche, ferner **dadurch gekennzeichnet, dass** als Busnetz ein Interbus, ein CAN-Bus, ein Profibus oder ein Ethernet verwendet wird.

17. Verfahren nach einem der vorstehenden Ansprüche, ferner **dadurch gekennzeichnet, dass** das Broadcast-Telegramm innerhalb der Punkt-zu-Punkt-Datenübertragung wie Daten eines Teilnehmers angeordnet wird

18. Verfahren nach einem der vorstehenden Ansprüche, ferner **dadurch gekennzeichnet, dass** zusätzlich Standarddaten, insbesondere Standard-Ausgangsdaten und/oder zusätzliche, speziell abgesicherte Daten für angeschlossene Teilnehmer übertragen werden.

19. Verfahren nach einem der vorstehenden Ansprüche, ferner **dadurch gekennzeichnet, dass** eine Vielzahl von Teilnehmern eine sichere Broadcast-Telegrammnachricht absetzen, die von dezentralen Teilnehmern jeweils unabhängig ausgewertet werden können.

20. Vorrichtung, angepasst zur Verwendung innerhalb eines Busnetzes zur Durchführung des Verfahrens nach einem der vorstehenden Ansprüche,
**gekennzeichnet durch**
Mittel zum Erzeugen des Broadcast-Telegramms innerhalb einer Punkt-zu-Punkt-Datenübertragung und Anordnen des Broadcast-Telegramms an einer im Kommunikationszyklus definierten Stelle.

21. Vorrichtung nach vorstehendem Anspruch, ferner umfassend Mittel zum Erzeugen eines sicherheitsrelevante Daten umfassendes Sicherheitsprotokolls innerhalb des Broadcast-Telegramms.

22. Vorrichtung nach vorstehendem Anspruch, bei welcher die Mittel zum Erzeugen einer zentralen Einheit zugeordnet sind, die Teil eines Master-Teilnehmers oder Teil eines unmittelbar auf einen Master-Teilnehmer folgenden Broadcast-Teilnehmers ist.

23. Vorrichtung nach einem der vorstehenden Ansprüche 20-22, ferner **gekennzeichnet durch** Mittel zum Absichern des gesamten Broadcast-Telegramms mittels einer Sicherheitsinformationen.

24. Vorrichtung nach einem der vorstehenden Ansprüche 20-23, ferner **gekennzeichnet durch** wenigstens einem Busteilnehmer zugeordnete Mittel zum Einbetten von Broadcast-basierten und/oder Punkt-zu-Punkt basierten Daten innerhalb des Broadcast-Telegramms.

25. Vorrichtung nach einem der vorstehenden Ansprüche 20-24, ferner umfassend Mittel zum Mit- und/oder Auslesen von Daten aus dem Broadcast-Telegramm.

26. Vorrichtung nach einem der vorstehenden Ansprüche 20-25, angepasst zur Verwendung innerhalb eines Ringbusnetzes.

27. Vorrichtung nach einem der vorstehenden Ansprüche 20-26, angepasst zur Datenübertragung basierend auf einem Interbus, Profibus, CAN-Bus oder Ethernet.

28. Vorrichtung nach vorstehendem Anspruch umfassend wenigstens einen Busteilnehmer mit Mitteln zum Auslesen von Daten aus dem Broadcast-Telegramm auf der Rückleitung eines Ringbusnetzes.

29. Vorrichtung nach einem der vorstehenden Ansprüche 20-28, ferner **gekennzeichnet, durch** Mittel zum Auslesen des Broadcast-Telegramms an einer im Kommunikationszyklus definierten Stelle im Übertragungsprotokoll.

30. Vorrichtung nach einem der vorstehenden Ansprüche 20-29, ferner **gekennzeichnet, durch** Busteilnehmer zugeordnete Mittel zum Extrahieren von dem entsprechenden Busteilnehmer zugewiesenen Daten des Broadcast-Telegramms **durch** den Busteilnehmer.

31. Vorrichtung nach einem der vorstehenden Ansprüche 20-30, ferner **gekennzeichnet durch** Mittel zum definierten Zuordnen von Daten zu einem Teilnehmer.

32. Vorrichtung nach einem der vorstehenden Ansprüche 20-31, ferner **gekennzeichnet durch** Busteilnehmer zugeordnete Mittel zur Überprüfung eines erhaltenen oder mitgelesenen Datenstroms **durch** den Busteilnehmer.

33. Vorrichtung nach einem der vorstehenden Ansprüche 20-32, ferner **gekennzeichnet durch** Busteilnehmer zugeordnete Mittel zum Speichern und/oder Überwachen von Dateneingangszeiten.

34. Vorrichtung nach einem der vorstehenden Ansprüche 20-33, ferner **gekennzeichnet durch** Busteilnehmer zugeordnete Mittel zum Auslösen einer Reaktion unter Ansprechen auf im Broadcast-Telegramm übertragene Daten **durch** den Busteilnehmer.

35. Vorrichtung nach einem der vorstehenden Ansprüche 20-34, ferner umfassend wenigstens einen mehrkanalig ausgebildeten Teilnehmer, insbesondere sicherheitsgerichteten Teilnehmer.

36. Busnetz an welches mehrere Teilnehmer zur Durchführung eines Verfahrens nach einem der vorstehenden Ansprüche 1-19 angeschlossen und angepasst sind, insbesondere basierend auf einem nachrichtenorientierten oder E/A-orientierten Übertragungsprotokoll.

37. Busnetz nach vorstehendem Anspruch, umfassend wenigstens einen Interbus mit einem Übertragungsprotokoll, welches ein Broadcast-Telegramm unmittelbar zwischen dem Loopback-Wort und den Eingangsdaten aufweist.

38. Busnetz nach einem der vorstehenden Ansprüche 36-37, aufweisend ein Übertragungsprotokoll, welches ein abgesichertes Broadcast-Telegramm zusätzlich zu einer Standard-Broadcast-Information überträgt.

## Claims

1. Method for the transmission ofdata via a bus network, to which a plurality of subscribers are connected, wherein the bus network used is a master/slave-based ring bus, via which, for each communication cycle, data are transmitted in each case individually by means of a data transmission protocol, which is designed for point-to-point data transmission, from a subscriber (master) designed as the master to the further subscribers (TNx, STNx),
**characterised in that** within the point-to-point data transmission from a subscriber (broadcaster) designed with suitable means, a broadcast message, within which selected data can be transmitted in a broadcast transmission mode, is incorporated such that it is located at clearly defined locations at specifiable points in time or cycle portions and access by selected subscribers is guaranteed accordingly, and it is simultaneously transmitted during each communication cycle.

2. Method as claimed in the preceding claim, further **characterised in that** safety-relevant data, in particular safety-relevant output data, are transmitted within the broadcast message.

3. Method as claimed in any one of the preceding claims, **characterised in that**, in addition to a standard or general broadcast protocol, a safety-broadcast message is inserted, within which selected safety-relevant data can be transmitted.

4. Method as claimed in any one of the preceding claims, further **characterised in that** a central unit (master, broadcaster) generates a safety protocol which is transmitted by means of the broadcast message to all of the subscribers (TNx, STNx) connected in the system.

5. Method as claimed in the preceding claim, further **characterised in that** the central unit is designed as part of a master subscriber or as a broadcast subscriber directly following a master subscriber.

6. Method as claimed in any one of the preceding claims 3 to 5, further **characterised in that** the safety protocol for transmitting safety-relevant data is safeguarded as a whole by means of safety information, in particular using a CRC checksum.

7. Method as claimed in any one of the preceding claims 3 to 6, further **characterised in that** broadcast-based and/or point-to-point-based data are transmitted within the safety protocol.

8. Method as claimed in any one of the preceding claims, further **characterised in that** an allocation is effected between a subscriber, in particular an output subscriber, and data assigned thereto within the broadcast message, by means of addressing the subscriber and/or an arrangement of the data in the data stream corresponding to the arrangement of the subscribers.

9. Method as claimed in any one of the preceding claims, further **characterised in that** data are read out from the broadcast message by at least one subscriber, in particular an output subscriber.

10. Method as claimed in any one of the preceding claims, further **characterised in that** data are simultaneously read and/or read out from the broadcast message by at least one subscriber, in particular an output subscriber, on the return line.

11. Method as claimed in any one of the preceding claims, further **characterised in that** data of the broadcast message are accessed synchronously by subscribers, in particular output subscribers.

12. Method as claimed in any one of the preceding claims, further **characterised in that** subscribers, in particular output subscribers, extract from the broadcast message their assigned data by the subscriber, in particular the output subscriber.

13. Method as claimed in any one of the preceding claims, further **characterised in that** subscribers, in particular output subscribers, carry out a check of the data stream by the subscriber, in particular the output subscriber.

14. Method as claimed in any one of the preceding claims, further **characterised in that** at least one subscriber, in particular an output subscriber, stores the time of receipt of data.

15. Method as claimed in any one of the preceding claims, further **characterised in that** subscribers, in particular output subscribers, carry out by means of the subscriber, in particular the output subscriber, a safety-oriented reaction in response to data transmitted in the broadcast message.

16. Method as claimed in any one of the preceding claims, further **characterised in that** an Interbus, a CAN bus, a Profibus or an Ethernet is used as the bus network.

17. Method as claimed in any one of the preceding claims, further **characterised in that** the broadcast message is arranged within the point-to-point data transmission like data of a subscriber.

18. Method as claimed in any one of the preceding claims, further **characterised in that** in addition, standard data, in particular standard output data and/or additional, specifically safeguarded data, are transmitted for connected subscribers.

19. Method as claimed in any one of the preceding claims, further **characterised in that** a multiplicity of subscribers dispatch a secure broadcast message which in each case can be evaluated independently by decentralised subscribers.

20. Apparatus, adapted for use within a bus network for carrying out the method as claimed in any one of the preceding claims, **characterised by**
means for generating the broadcast message within a point-to-point data transmission and
arranging the broadcast message at a location defined in the communication cycle.

21. Apparatus as claimed in the preceding claim, further comprising means for generating a safety protocol, which comprises safety-relevant data, within the broadcast message.

22. Apparatus as claimed in the preceding claim, wherein the generating means are allocated to a central unit which is part of a master subscriber or part of a broadcast subscriber directly following a master subscriber.

23. Apparatus as claimed in any one of the preceding claims 20-22, further **characterised by** means for safeguarding the entire broadcast message by means of safety information.

24. Apparatus as claimed in any one of the preceding claims 20-23, further **characterised by** means allocated to at least one bus subscriber for embedding broadcast-based and/or point-to-point-based data within the broadcast message.

25. Apparatus as claimed in any one of the preceding claims 20-24, further comprising means for simultaneously reading and/or reading-out data from the broadcast message.

26. Apparatus as claimed in any one of the preceding claims 20-25, adapted for use within a ring bus network.

27. Apparatus as claimed in any one of the preceding claims 20-26, adapted for data transmission based on an Interbus, a Profibus, a CAN bus or Ethernet.

28. Apparatus as claimed in the preceding claim, comprising at least one bus subscriber having means for reading out data from the broadcast message on the return line of a ring bus network.

29. Apparatus as claimed in any one of the preceding claims 20-28, further **characterised by** means for reading out the broadcast message at a location in the transmission protocol defined in the communication cycle.

30. Apparatus as claimed in any one of the preceding claims 20-29, further **characterised by** means allocated to a bus subscriber for extracting data of the broadcast message, which are assigned to the corresponding bus subscriber, by the bus subscriber.

31. Apparatus as claimed in any one of the preceding claims 20-30, further **characterised by** means for defined allocation of data to a subscriber.

32. Apparatus as claimed in any one of the preceding claims 20-31, further **characterised by** means allocated to a bus subscriber for checking a received or simultaneously read data stream by the bus subscriber.

33. Apparatus as claimed in any one of the preceding claims 20-32, further **characterised by** means allocated to a bus subscriber for storing and/or monitoring data input times.

34. Apparatus as claimed in any one of the preceding claims 20-33, further **characterised by** means allocated to a bus subscriber for triggering a reaction by the bus subscriber in response to data transmitted in the broadcast message.

35. Apparatus as claimed in any one of the preceding claims 20-34, further comprising at least one subscriber of multichannel design, in particular a safety-oriented subscriber.

36. Bus network, to which a plurality of subscribers for carrying out a method as claimed in any one of the preceding claims 1-19 are connected and adapted, in particular based on a message-oriented or I/O-oriented transmission protocol.

37. Bus network as claimed in the preceding claim, comprising at least one Interbus with a transmission protocol which comprises a broadcast message directly between the loopback word and the input data.

38. Bus network as claimed in any one of the preceding claims 36-37, comprising a transmission protocol which transmits a safeguarded broadcast message in addition to an item of standard broadcast information.

## Revendications

1. Procédé de transmission de données par un réseau en bus, auquel sont raccordés plusieurs utilisateurs, le réseau en bus employé étant un réseau en anneau à base maître/esclave, sur lequel des données sont transmises individuellement par cycle de communication, au moyen d'un protocole de transmission de données conçu pour une transmission de données point à point, d'un utilisateur prévu comme maître (Master) vers les autres utilisateurs (TNx, STNx),
**caractérisé en ce que**
un télégramme de diffusion, à l'intérieur duquel des données sélectionnées peuvent être transmises dans un mode de transmission de type diffusion, est incorporé à l'intérieur de la transmission de données point à point depuis un utilisateur prévu avec des moyens appropriés (Broadcaster), de telle manière qu'il se trouve à des emplacements clairement définis lors de moments ou de parties de cycle prédéterminables et qu'un accès d'utilisateurs sélectionnés est assuré en conséquence, et qu'il est conjointement transmis par cycle de communication.

2. Procédé selon la revendication précédente, **caractérisé en outre en ce que** des données relatives à la sécurité, en particulier des données de sortie relatives à la sécurité, sont transmises à l'intérieur du télégramme de diffusion.

3. Procédé selon l'une des revendications précédentes, **caractérisé en ce qu'**en plus d'un protocole de diffusion standard ou général, un télégramme de diffusion de sécurité est inséré, à l'intérieur duquel peuvent être transmises des données relatives à la sécurité sélectionnées.

4. Procédé selon l'une des revendications précédentes, **caractérisé en outre en ce qu'**une unité centrale (Master, Broadcaster) génère un protocole de sécurité, lequel est transmis au moyen du télégramme de diffusion à tous les utilisateurs raccordés au système (TNx, STNx).

5. Procédé selon la revendication précédente, **caractérisé en outre en ce que** l'unité centrale est réalisée comme partie d'un utilisateur maître ou comme utilisateur de diffusion immédiatement consécutif à un utilisateur maître.

6. Procédé selon l'une des revendications 3 à 5, **caractérisé en outre en ce que** le protocole de sécurité pour la transmission de données relatives à la sécurité est protégé dans son ensemble au moyen d'une information de sécurité, recourant en particulier à une somme de contrôle CRC.

7. Procédé selon l'une des revendications 3 à 6, **caractérisé en outre en ce que** des données basées diffusion et/ou basées point à point sont transmises à l'intérieur du protocole de sécurité.

8. Procédé selon l'une des revendications précédentes, **caractérisé en outre en ce qu'**une association entre un utilisateur, en particulier un utilisateur de sortie, et des données affectées à celui-ci à l'intérieur du télégramme de diffusion est effectuée par adressage de l'utilisateur et/ou par une disposition des données dans le flux de données qui corresponde à la disposition des utilisateurs.

9. Procédé selon l'une des revendications précédentes, **caractérisé en outre en ce que** des données sont extraites du télégramme de diffusion par au moins un utilisateur, en particulier un utilisateur de sortie.

10. Procédé selon l'une des revendications précédentes, **caractérisé en outre en ce que** des données sont lues et/ou extraites du télégramme de diffusion sur la ligne de retour par au moins un utilisateur, en particulier un utilisateur de sortie.

11. Procédé selon l'une des revendications précédentes, **caractérisé en outre en ce que** des utilisateurs, en particulier des utilisateurs de sortie, accèdent de manière synchrone à des données du télégramme de diffusion.

12. Procédé selon l'une des revendications précédentes, **caractérisé en outre en ce que** des utilisateurs, en particulier des utilisateurs de sortie, extraient du télégramme de diffusion les données qui leur sont affectées via l'utilisateur, en particulier l'utilisateur de sortie.

13. Procédé selon l'une des revendications précédentes, **caractérisé en outre en ce que** des utilisateurs, en particulier des utilisateurs de sortie, appliquent un contrôle du flux de données via l'utilisateur, en particulier l'utilisateur de sortie.

14. Procédé selon l'une des revendications précédentes, **caractérisé en outre en ce qu'**au moins un utilisateur, en particulier un utilisateur de sortie, entre le temps de réception de données.

15. Procédé selon l'une des revendications précédentes, **caractérisé en outre en ce que** des utilisateurs, en particulier des utilisateurs de sortie, appliquent via l'utilisateur, en particulier l'utilisateur de sortie, une réaction orientée sécurité en réponse à des données transmises dans le télégramme de diffusion.

16. Procédé selon l'une des revendications précédentes, **caractérisé en outre en ce que** le réseau en bus utilisé est un Interbus, un bus CAN, un Profibus ou un Ethernet.

17. Procédé selon l'une des revendications précédentes, **caractérisé en outre en ce que** le télégramme de diffusion est disposé comme des données d'un utilisateur à l'intérieur de la transmission de données point à point.

18. Procédé selon l'une des revendications précédentes, **caractérisé en outre en ce que** des données standard complémentaires, en particulier des données de sortie standard et/ou des données complémentaires spécialement protégées, sont en outre transmises pour des utilisateurs raccordés.

19. Procédé selon l'une des revendications précédentes, **caractérisé en outre en ce qu'**une pluralité d'utilisateurs adressent un message de télégramme de diffusion sûr, qui peut être évalué indépendamment par des utilisateurs décentralisés.

20. Dispositif adapté à une utilisation à l'intérieur d'un réseau en bus pour l'exécution du procédé selon l'une des revendications précédentes,
**caractérisé par**
des moyens de génération du télégramme de diffusion à l'intérieur d'une transmission de données point à point et par une disposition du télégramme de diffusion à un emplacement défini du cycle de communication.

21. Dispositif selon la revendication précédente, comprenant en outre des moyens de génération d'un protocole de sécurité comprenant des données relatives à la sécurité à l'intérieur du télégramme de diffusion.

22. Dispositif selon la revendication précédente, où les moyens de génération sont affectés à une unité centrale qui fait partie d'un utilisateur-maître ou d'un utilisateur de diffusion immédiatement consécutif à un utilisateur maître,

23. Dispositif selon l'une des revendications 20 à 22, **caractérisé en outre par** des moyens de protection de l'ensemble du télégramme de diffusion par une information de sécurité.

24. Dispositif selon l'une des revendications 20 à 23, **caractérisé en outre par** des moyens affectés à au moins un utilisateur de bus pour l'incorporation de données basées diffusion et/ou basées point à point à l'intérieur du télégramme de diffusion.

25. Dispositif selon l'une des revendications 20 à 24, comprenant en outre des moyens de lecture et/ou d'extraction de données du télégramme de diffusion.

26. Dispositif selon l'une des revendications 20 à 25, adapté pour une utilisation à l'intérieur d'un réseau de bus en anneau.

27. Dispositif selon l'une des revendications 20 à 26, adapté pour la transmission de données sur la base d'un Interbus, Profibus, bus CAN ou Ethernet.

28. Dispositif selon la revendication précédente, comprenant au moins un utilisateur de bus avec des moyens d'extraction de données du télégramme de diffusion sur la ligne de retour d'un réseau de bus en anneau.

29. Dispositif selon l'une des revendications 20 à 28, **caractérisé en outre par** des moyens d'extraction du télégramme de diffusion à un emplacement défini du cycle de communication dans le protocole de transmission.

30. Dispositif selon l'une des revendications 20 à 29, **caractérisé en outre par** des moyens attribués à l'utilisateur de bus pour l'extraction via l'utilisateur de bus de données du télégramme de diffusion affectées à l'utilisateur de bus correspondant.

31. Dispositif selon l'une des revendications 20 à 30, **caractérisé en outre par** des moyens d'affectation définie de données à un utilisateur.

32. Dispositif selon l'une des revendications 20 à 31, **caractérisé en outre par** des moyens attribués à l'utilisateur de bus pour le contrôle via l'utilisateur de bus d'un flux de données reçu ou lu par l'utilisateur de bus.

33. Dispositif selon l'une des revendications 20 à 32, **caractérisé en outre par** des moyens attribués à l'utilisateur de bus pour la mémorisation et/ou la surveillance de temps d'entrée de données.

34. Dispositif selon l'une des revendications 20 à 33, **caractérisé en outre par** des moyens attribués à l'utilisateur de bus pour le déclenchement d'une réaction en réponse à des données transmises dans le télégramme de diffusion via l'utilisateur de bus.

35. Dispositif selon l'une des revendications 20 à 34, comprenant en outre au moins un utilisateur prévu avec plusieurs canaux, en particulier un utilisateur orienté sécurité.

36. Réseau en bus auquel sont raccordés et adaptés plusieurs utilisateurs pour l'exécution d'un procédé selon l'une des revendications 1 à 19, en particulier sur la base d'un protocole de transmission orienté messages ou orienté entrée/sortie.

37. Réseau en bus selon la revendication précédente, comprenant au moins un Interbus avec un protocole de transmission qui présente un télégramme de diffusion directement entre le mot de rebouclage et les données d'entrée.

38. Réseau en bus selon la revendication 36 ou 37, présentant un protocole de transmission qui transmet un télégramme de diffusion protégé en plus d'une information de diffusion standard.
